# EUROPEAN PATENT APPLICATION

(11) **EP 3 889 876 A1**
(43) Date of publication of application: **06.10.2021**
(21) Application number: 21164790.4
(22) Date of filing: 25.03.2021
(51) Int. Cl.: G06Q 30/02

(54) **METHOD AND SYSTEM FOR INTERACTING WITH A USER**

(30) Priority: 31.03.2020 NL 2025248
(71) Applicant: van Kessel, Dirk Thomas, 1053 GG Amsterdam (NL)
(72) Inventor: van Kessel, Dirk Thomas, 1015 BV Amsterdam (NL); van Even, Jordi, 1015 BV Amsterdam (NL); Groen, Jan Maarten, 1015 BV Amsterdam (NL)
(74) Representative: Nederlandsch Octrooibureau

(57) **Abstract**

The invention provides a system, comprising a camera, configured to detect a user in the field of view of the camera and to track the detected user, a display, an interaction module, configured to interact with the user, and a processor, connected to the camera, the display and the interaction module, wherein, in operation, the processor is configured to detect a user in the field of view of the camera, cause the display to display a first image, said image including at least one tracking portion, move the at least one tracking portion in the first image based on the movement of the user detected by the camera, upon interaction of the user with the interaction module, display a second image. The invention further provides a method for interacting with a user and a computer program product implementing said method on a programmable device, wherein the interaction module comprises a payment module, and the interaction of the user comprises a payment through the payment module.

## Description

### Field of the invention

The present invention relates to a method and system for obtaining monetary donations. In particular the invention relates to an electronic kiosk for obtaining monetary donations.

### Background art

It is well known in the art that images (which term in this application can indicate both still images and moving images or video) are used for general advertising. When used by charitable organizations and foundations, images can show the dire situations or conditions that others are in. Such (graphic) images then incites a person to donate to improve the living conditions (or for research into vaccinations, for example).

While such images are effective in receiving donations, nowadays they must compete with other forms of advertisements for attention, such as video advertisements, and also the use of personal devices such as smartphones or even books and magazines. If the person is too engaged in reading a book or mobile device messages, then an image positioned on the side of a building wall may not be as effective in drawing attention.

There is therefore a need for a method and system for engaging in a person in order to collect charitable donations.

### Summary of the invention

The invention provides a system, comprising a camera, configured to detect a user in the field of view of the camera and to track the detected user, a display, an interaction module, configured to interact with the user, and a processor, connected to the camera, the display and the interaction module, wherein, in operation, the processor is configured to detect a user in the field of view of the camera, cause the display to display a first image, said image including at least one tracking portion, animate or move the at least one tracking portion in the first image based on the movement of the user detected by the camera, upon interaction of the user with the interaction module, display a second image.

The invention thus provides a method for a system, such as an electronic kiosk, to detect and interact with a user by displaying images that track the movement of the user. In this disclosure, the term "user" is used to indicate an individual nearby a system according an embodiment of the invention. A user is not necessarily interacting with the system at first, but is in range of the camera for the system to detect and (eventually) interact with and track said user.

In an embodiment of the invention, the interaction module comprises a (wireless) payment module, and the interaction with the user involves the user effecting a payment (e.g. to a charity advertised by the system) using the payment module. In an embodiment, the interaction module is another type of module that can interact with a user. For example it can be a contact module that can receive a user's telephone number, email address, or other contact information. Such a contact module can comprise a physical or virtual keyboard or a wireless receiver that can interact with a user's smart phone. Other interaction modules can also be provided. What is important is that the interaction module interacts with the user in some way after the user has become interested in the content that the system has shown.

In an embodiment of the invention, the electronic kiosk further comprise a speaker configured to transmit a message to the user prompting the user for payment and/or a microphone configured to receive a message from the user, possibly in response to the first message. The invention thus allows the system to supply (and receive) audible messages tailored to the user, and the user may respond in kind.

In an embodiment of the invention, the processor the processor is further configured to detect a plurality of users in the field of view of the camera and to select one of the plurality of users as the user (to be tracked). The system may determine which user to track based on one or more of the parameters: proximity, distance, movement direction, direction of sight, estimated age of the user. For example, the system could be configured to track the nearest user who appears to be of adult age, or a user who appears to be most directly looking at the system.

In an embodiment according to the invention, the interaction module is mounted on the display. This allows for the placement of the interaction module not only at the edges of the display, but can also be mounted on the display itself. This allows the images shown on the display to point out the interaction module visually, which can help to entice the user to interact.

In another embodiment according to the invention, a second camera is used to track the motion of the user. This allows for a camera with a large field of view to detect a user, and the second camera may be of higher resolution (with a narrower field of view compared to the first camera) to more accurately track the movements of the user.

Furthermore, the invention provides a method for a system comprising a camera, display, and interaction module, for interacting with a user, the method comprising the steps of detecting a user in the field of view of the camera, displaying, on the display, a first image, said image including at least one tracking portion, animating or moving the at least one tracking portion in the first image based on the movement of the user detected by the camera, upon interaction of the user with the interaction module, displaying a second image on the display.

In an embodiment, the method further includes the step of, after detecting a user, attracting the user's attention and detecting the user's attention.

In an embodiment the method comprises the step of, after detecting the user's attention, drawing in the user and detecting the user approaching the system.

In an embodiment the method comprises the step of, after detecting the user approaching the system, suggesting an interaction and interacting with the user.

In an embodiment the method comprises:
- detecting a plurality of users in the field of view of the camera
- selecting one of the plurality of users as the user

The invention further provides a computer program product comprising program instructions, which, when executed on a processor of a system comprising the processor, a display, a camera, and an interaction module, implement the method as described in this disclosure.

### Brief description of the drawings

The present invention will be discussed in more detail below, with reference to the attached drawings in which,
Figure 1 depicts an electronic kiosk according to an embodiment of the invention;
Figure 2A-F schematically depicts the steps performed by the electronic kiosk to receive payment according to an embodiment of the invention;
Figure 3 schematically depicts the components of a system according to an embodiment of the invention;
Figure 4 depicts a flow chart for a process according to an embodiment of the invention;
Figure 5 schematically depicts a list of user characteristics that can be determined by a system according the invention; and
Figure 6 schematically depicts a flow chart for an Artificial Intelligence enhanced process according the invention.

### Description of the embodiments.

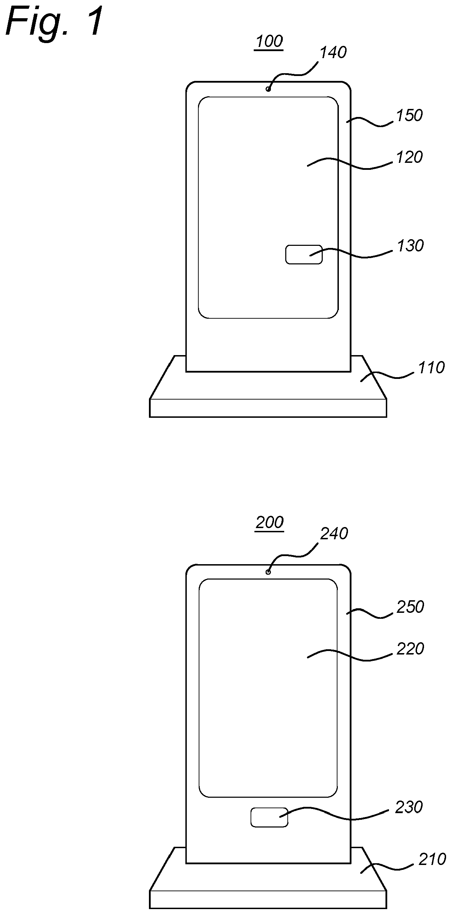

Figure 1 depicts a system in the form of an electronic kiosk 100, 200 according to an embodiment of the invention. The electronic kiosk has a base 110, 210 and a wall 150, 250. A display 120, 220 is positioned on at least one side of the wall 150, 250.

The display 120, 220 can be any display type, for example (but not limited to), liquid crystal display (LCD), organic light emitting diode (OLED), active matrix organic light-emitting diode (AMOLED), plasma display panel (PDP), holographic display, projection and quantum dot (QLED) displays. The display may also include a tactile device.

The interaction module in Figure 1 is formed as payment module 130, 230 and is configured to accept payment from, for example, a debit or credit card. The payment module 130, 230 can be configured for wireless contact payment, but can also be configured to have the card inserted into the payment module for payment. The payment module 130, 230 can be positioned on the display 120, below the display 220, or elsewhere on the system, as long as the payment module is in an effective position to for the user to place the card onto.

Instead of or in addition to a payment module, another interaction module such as a contact module for receiving contact details can be provided. Any payment is not limited to credit or debit cards. In principle, payment can be effected by any means, e.g. cash, bitcoin or other cryptocurrency. A user may also provide details so that the operator of the system may setup payment with the user (e.g. via a smartphone app). Another form of payment is to display a barcode or QR code on the display 120, 220 which can be scanned by an app on a smartphone or another electronic device to detect the amount and destination of the payment, after which the payment is approved by the user in the app. In that scenario, the part of the display showing the barcode or QR code acts as the payment module.

The camera 240 may be mounted above the display in the electronic kiosk. Furthermore, multiple cameras may be installed on the kiosk in order to better detect the user. For example, one camera may be used to detect whether a user is in the vicinity of the kiosk, or in the field of view of the camera, and a second camera can track the facial features of the user to better track the motions and expressions of said user.

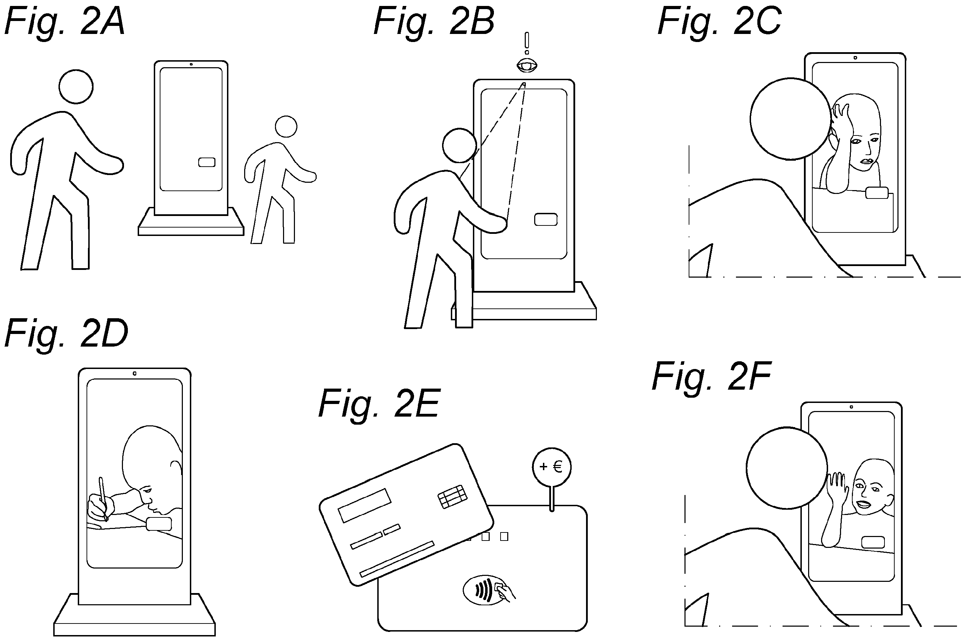

Figure 2A-F depicts the steps performed by the electronic kiosk. Initially, the kiosk is in a standby mode, and the display is showing a standby image (fig. 2A). Once a user is detected to being in the field of view of the camera (fig. 2B), the processor in the kiosk determines a first image, comprising at least one movable (or tracking) portion, to display on the kiosk. The movement (and facial features) of the user is then monitored by the camera to adaptively adjust the at least one tracking portion in the first image. For example, the at least one tracking portion can be the eyes of a child in an image, such that the child's eyes track the movement of the user, and follows the user. Another example of at least one tracking portion in the first image could be the forearms of the child reaching out to the user, or make a waving gesture in the direction of the user inviting the user to approach the kiosk. The tracking portion may surprise a user - who may only be expecting a static image - and engage the user to pay more attention to the system (fig 2C).

The tracking portion can be implemented as a computer generated image that is blended in with camera recorded video images. For example, the child displayed in figure 2C may be recorded by video. The pixels representing the eyes of the child in the video recording may be overlaid with computer generated pixels so that the eyes appear to track the user. In other words, the tracking portion is animated in response to the user's movement. In an alternative embodiment, a larger portion of the display is computer generated, for example the entire face or head of the child, so that the child may also appear to turn his/her head towards the user. Going further, the entire child image may be computer generated, with only the background being a still or moving image. The tracking portion can be a computer generated image, in particular a "live" computer generated image, which is rendered in real-time in order to respond to the detection of the user's location, looking direction, distance, etc. The computer generated image may be blended in with a video recording or even a still image. How to generate such computer generated images is known in the art. For example, a 3D model can be used, rendered by a Graphics Processing Unit (GPU) or Computer Processing Unit (CPU).

The system may then try to engage with the user. A sign of engagement can be that the user is paying attention (which can be detected based on eye tracking) and/or that the user is approaching the kiosk. The ultimate goal is to incite the user to donate for the charitable foundation or organization using the payment module (fig. 2D). Upon detection of a donation made by the user (fig. 2E), the kiosk can display a visual indication of the positive manner in which the donation will improve the situation shown earlier (fig. 2F).

In addition to the at least one tracking portion, the first image may also convey a message (in text or any other form) to the user. The introduction of text onto the image may result in the user not being able to understand the message. As an optional feature, the electronic kiosk may be able to, based on the detected user, provide the message in a user-appropriate language and payment currency. If the display also includes a tactile device, the tactile device will be able to provide the message. This provides an effective method to connect with the user without misunderstandings.

The kiosk may also be configured to provide an audible message prompting the user for donation. A speaker and a microphone may be mounted on the electronic kiosk and electrically connected to the processor. Such audible message may benefit users with impaired vision. Additionally, the audio message may be used in conjunction to the visual message to further engage with the user, for example by asking questions and reply to any queries by the user.

The user, when prompted to make a donation (payment), may then swipe his or her card onto the payment module. The payment module then identifies the payment method and performs the corresponding payment method.

Upon completion of payment, the electronic kiosk is then configured to display a second image that has the same at least one tracking portion (and text) as the first image. For example, the first image (which engages the kiosk with the user) depicts a crying child, and a second image (which confirms payment) depicts the same child but smiling, with the eyes (or arms or any other tracking portions) still performing movements based on user movement.

If there are more than one user in the field of view of the camera, the processor then determines which user to track. This may be performed by, for example, determining which user is closer to the kiosk. Furthermore, the determination step may include mathematical functions, for example, weighted maximums, to identify which user to perform tracking on.

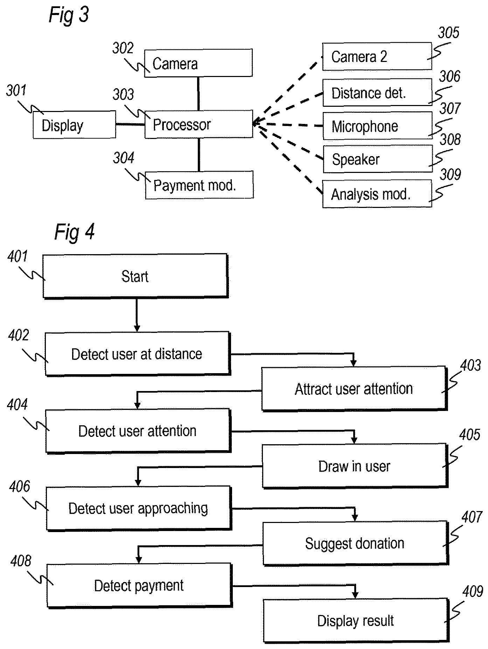

Figure 3 shows the various components of a system according the invention, which may be embodied as an electronic kiosk. The system comprises a display 301, a camera 302, a processor 303, and a payment module 304. These components are electrically coupled to the processor. Optionally, the electronic kiosk may also comprise a second camera 305, a distance detector 306, a microphone 307, a speaker 308, and an analysis module 309. More than 2 cameras may be used as well. The distance detector could be a module which processes images detected by one or more cameras 302, 305 in order to deduce individuals in the images, and their respective distances. The analysis module 309 can be used to analyse images from the cameras, for example to detect if the user is an adult or a child, alone or in a group. Based on the analysis, a different way to attract attention and/or to engage might be chosen. The analysis module can also be configured to choose an attention attraction or engagement method may be used based on earlier results obtained with various approaches. A machine learning algorithm can be used to optimize the attention attraction and engagement methods.

Figure 4 schematically shows a flow chart according to an embodiment of the invention. Generally speaking, the steps 402, 404, 406, and 408 on the left hand side are detections of the various levels of attention of a user, and can be measured with e.g. a camera 302, 305 and/or distance detector 306 and analysis module 309, coordinated by the processor 303. The steps 404, 405, 407, and 409 on the right hand side are actions taken by the terminal, typically in the nature of a display on the terminal and/or audio output through a speaker (but not limited thereto).

The process starts in step 401, or standby mode as described above. If a user is somewhere in the vicinity of the system and detected by a sensor, such as camera 302, 305 or distance detector 306 of Figure 3, in step 402, the system will attempt to interact with that user. The interaction with the user can be divided in three parts: attracting attention (step 403), drawing in or engaging with the user (step 405), and requesting or suggesting a donation (step 407). Each part may have one or more respective "success conditions". For example, a success condition for attracting attention (step 403) may be met when detecting the user at a distance - in step 402 - is looking at the system (as detected by an eye tracking detector in the kiosk based on images from a camera 302, 305), thereby detecting user attention as described in step 404. Upon detecting the user attention in step 404, a success condition for drawing in (or engaging with) the user (step 405) may be the detection of the user approaching in step 406 (this can be detected by e.g. a distance detector or be derived from camera images). The success condition for requesting a donation 407 will be the confirmation by the payment module 304, in step 408, that the user has donated money through the payment module.

Whenever a success condition is not met within a predetermined time, the system may return to either the previous step, the previous (or earlier) stage, or the standby mode (i.e the beginning). For example, if various attempts to attract attention in step 403 do not result in eye contact (step 404), the system may give up on that particular user, revert to step 401 and wait for detection of a new user at a distance. In an embodiment, the system will attempt to track people in the vicinity as either potential donors, uninterested donors, or recent donors. The system will attempt to attract attention from potential donors while ignoring people who have recently donated or who have shown no signs of interest for a certain amount of time.

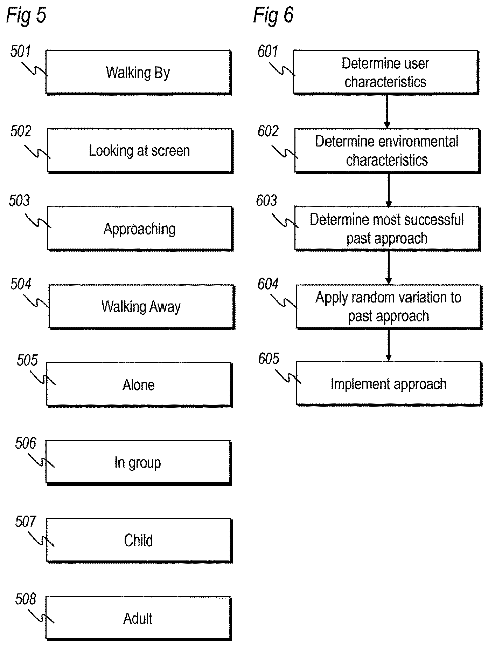

Figure 5 schematically depicts a list of user characteristics that can be determined by a system according the invention. The system can detect one or more of the following: if a user is walking by 501, looking at the screen 502, approaching 503, walking away 504, on their own 505 or in a group 506, a child 507 or an adult 508. Depending on the detections, the actions of the system (e.g. as described in reference to Figure 4) may be modified. For example, in case the system determines the user is most likely a child, the system's emphasis may be more on providing information about the charity rather than on requesting a donation.

Figure 6 schematically depicts a flow chart for an Artificial Intelligence enhanced process according the invention. In steps 601 and 602, the system determines user characteristics and environmental characteristics. A list of user characteristics may include those depicted in figure 5. The user characteristics may also include an age estimate and/or a gender estimate. The environmental characteristics may include time of day, day of the week, total number of people in the field of view of the camera, ambient noise level, lighting level, temperature, etc. For example, the system may determine a person walking past the kiosk talking to a mobile phone in his ear and a person walking past looking around the vicinity of the kiosk. In this case, the system may determine that it would be more likely to attract the user who is interested in observing their surroundings more than a user talking on his mobile phone, and therefore determines to attract the observing user than the talking user. In another example, when the area around the kiosk is overcrowded, there may be multiple people standing in the field of view of the camera in the kiosk for a long period of time. In this case, the system may determine the person, out of the plurality of people in the field of view, who is paying most attention to the standby screen and proceed to attract the user's attention.

In step 603, the system determines which actions have been most successful in the past. For example, for each of the three success conditions described in reference to Figure 4, it may determine which approach is most likely to result in success.

Having determined a candidate approach based on past experience, the system will apply random variations to the approach. For example, a different video clip may be shown, the audio level may be increased or decreased, the video playback speed may be reduced or increased, timings of certain audio-visual events may be changed, the definitions of success conditions may be adjusted, etc. This randomized approach will allow the system to develop new approaches which are even more successful than past approaches. Finally the system will implement the approach and add the result to its database of past experiences. The database of past experiences may be specific to the particular system (e.g. because it is strongly tied to the location where the system is placed), or it may be combined with the past experiences of other similar systems in different locations.

The user characteristics may also include a facial expression of the user. For example, as stated earlier, the method to detect user attention in step 404 may include capturing the facial image of the user using a camera. In such cases, the camera may be configured to determine a facial expression from the captured image. For example, if the camera captures the mouth in a U-shape configuration, the processor may determine that the user is smiling. With this information, the artificial intelligence (AI) enhanced process in step 601 may use this user characteristic (the user smiling) and determine in step 603 that the most successful approach may be that the child displayed on the screen to display a happy face. Conversely, if the camera detects frowns on the forehead of a user, the processor may determine this to be a sad face, which the AI enhanced process may then determine the most successful approach would be a crying baby.

In addition to the facial expression, the system may be configured to also determine and use an emotion corresponding to the facial expression. For example, a smiling face may correspond to a happy emotion. Such emotions may also be used as user characteristics. The system may be configured to receive image data (e.g. from the camera) with a facial expression, and to classify said image data (the expression) into one or more pre-determined classifications, such as "happy", "sad", "neutral", "excited", "annoyed", etc. The system may use an AI algorithm to classify the image data, more in particular a machine learning algorithm such as a neural network, in particular a convolutional neural network (CNN).

The system may be configured to track the eye (or eyes) of the user. As stated previously, the system may track the eyes to detect engagement with the user. The eye can also convey emotions, which can also be used as user characteristics. In an embodiment, retinal scanning may be perform to obtain user characteristics.

The system may employ video or audio based sentiment analysis methods to determine (quantitatively and qualitatively) an estimate of user emotion.

In order for the system using the e.g. AI enhanced process to determine the most successful past approach, the system is further configured to store data for a sample of approaches. This allows the system to maintain a repository from which it is able to retrieve the most successful past approach from. The data can be retrieved after a set time period, or may be retrieved at periodic time intervals.

The retrieved data can then be analysed further to produce more sophisticated user characteristic classification, such as different types of happiness, or a more fine-tuned age estimate of the user.

In the foregoing description of the figures, the invention has been described with reference to specific embodiments thereof. It will, however, be evident that various modifications and changes may be made thereto without departing from the scope of the invention as summarized in the attached claims.

In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

In particular, combinations of specific features of various aspects of the invention may be made. An aspect of the invention may be further advantageously enhanced by adding a feature that was described in relation to another aspect of the invention.

It is to be understood that the invention is limited by the annexed claims and its technical equivalents only. In this document and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

## Claims

1. A system, comprising:
- a camera, configured to detect a user in the field of view of the camera and to track the detected user,
- a display,
- an interaction module, configured to interact with the user, and
- a processor, connected to the camera, the display and the interaction module, wherein, in operation, the processor is configured to:
- detect a user in the field of view of the camera,
- cause the display to display a first image, said image including at least one tracking portion,
- animate the at least one tracking portion in the first image based on the movement of the user detected by the camera,
- upon interaction of the user with the interaction module, display a second image,
wherein the interaction module comprises a payment module, and the interaction of the user comprises a payment through the payment module.

2. The system of claim 1 , wherein the interaction module comprises a contact module, and the interaction of the user comprises sending or entering contact details to or into the contact module.

3. The system of any of the preceding claims, wherein the tracking portion is a computer generated image.

4. The system of any of the preceding claims, further comprising:
a speaker configured to transmit a first message to the user prompting the user to interact;
a microphone configured to receive a second message from the user comprising a response to the first message.

5. The system of any of the preceding claims, wherein the processor is further configured to:
- detect a plurality of users in the field of view of the camera;
- select one of the plurality of users as the user.

6. The system of any of the preceding claims, wherein the interaction module is mounted on the display.

7. A method for a system comprising a camera, display, and interaction module, for interacting with a user, the method comprising the steps of
- detecting a user in the field of view of the camera,
- displaying, on the display, a first image, said image including at least one tracking portion,
- animating the at least one tracking portion in the first image based on the movement of the user detected by the camera,
- upon interaction of the user with the interaction module, displaying a second image on the display,
wherein the interaction module comprises a payment module, and the interaction of the user comprises a payment through the payment module.

8. The system of claim 7, wherein the interaction module comprises a contact module, and the interaction of the user comprises sending or entering contact details to or into the contact module.

9. The method according to any one of claims -7 or 8, wherein the method further includes the step of, after detecting a user, attracting the user's attention and detecting the user's attention.

10. The method according to claim 9, further comprising the step of, after detecting the user's attention, drawing in the user and detecting the user approaching the system.

11. The method according to claim 10, further comprising the step of, after detecting the user approaching the system, suggesting an interaction and interacting with the user.

12. The system of any of the preceding claims 7 - 11, further comprising:
- detecting a plurality of users in the field of view of the camera
- selecting one of the plurality of users as the user.

13. The system of any of the preceding claims 7 - 12, further comprising:
- determining an estimate of an emotion of the user, based on video and/or audio analysis.

14. A computer program product comprising program instructions, which, when executed on a processor of a system comprising the processor, a display, a camera, and an interaction module, implement the method of any one of claims 7-13 .
